# EUROPEAN PATENT APPLICATION

(11) **EP 4 718 180 A1**
(43) Date of publication of application: **01.04.2026**
(21) Application number: 24290034.8
(22) Date of filing: 30.09.2024
(51) Int. Cl.: G05B 19/418, B25J 9/16

(54) **CONFIGURING A PROCESSING ASSEMBLY**

(71) Applicant: Sartorius Stedim Data Analytics AB, 903 33 Umeå (SE)
(72) Inventor: Vockeroth, Christian, 34302 Guxhagen (DE); Mak, Cyril, 13400 Aubagne (FR)
(74) Representative: Müller-Boré & Partner Patentanwälte PartG mbB

(57) **Abstract**

Aspects relate to a computer implemented method, a computer program, a computer readable medium, and a computing device for configuring a processing assembly to perform at least one process step of a production process to produce a chemical, pharmaceutical and/or biotechnological product. The method comprises receiving, by a computing device, capability information of at least one processing assembly. The capability information identifies a plurality of components of the processing assembly and a plurality of configuration parameters of the processing assembly. The method further comprises receiving, by the computing device, a primary recipe for a primary production process to produce a chemical, pharmaceutical and/or biotechnological product. The primary recipe comprises a plurality of primary process steps defining the primary production process and one or more values for a first primary subset of the plurality of configurable parameters. The first primary subset of the plurality of configurable parameters corresponds to a first primary process step of the plurality of primary process steps. The method further comprises determining, by the computing device and based on the primary recipe, a first primary subset of the plurality of components of the processing assembly. The first primary subset of the plurality of components corresponds to the first primary process step. The method further comprises causing, by the computing device, activation of the first primary subset of the plurality of components. The remaining components of the plurality of components remain inactive. The method further comprises transmitting, by the computing device, the one or more values for the first primary subset of the plurality of configurable parameters to the processing assembly.

## Description

The present disclosure relates to a production process to produce a chemical, pharmaceutical and/or biotechnological product. More specifically, aspects relate to configuring a processing assembly to perform at least one process step of the production process to produce the chemical, pharmaceutical and/or biotechnological product.

Examples of production processes according to the present disclosure are industrial processes, particularly biopharmaceutical processes. A production process of the present disclosure may involve chemical or microbiological conversion of material in conjunction with the transfer of mass, heat, and energy. The production process may be scale dependent; in other words, the process may behave differently on a small scale (e.g., in a laboratory, such as a laboratory for research or process development of a molecule) in comparison to a large scale (e.g., in manufacturing for production of a commercial batch). The production process may include heterogeneous chemical reactions. The production process may involve organisms or biochemically active substances derived from such organisms. The production process may be aerobic or anaerobic.

The production process may be a batch process (e.g., a commercial batch process), which is an example of an industrial, biopharmaceutical process. The batch process may involve producing small amounts (e.g., lots or quantities) of a product, and gradually scaling up to larger amounts. The batch process may involve chemical and/or biological reactions that take time to complete.

In batch processing, multiple batches of the product may be produced, possibly at different scales (e.g. five liters, ten liters, one hundred liters). There may be a pause between each batch, e.g. to set up a new batch.

The production process may be a continuous process, designed such that growth is limited by the availability of one or two (or more) limiting components of a medium. When an initial quantity of one of the limiting components is exhausted, growth ceases if a steady state is reached, but growth may be renewed by the addition of the limiting component(s). Addition of nutrients may increase the volume of a medium in a vessel (e.g., bioreactor vessel) in which the product is produced. A portion of the medium may drain off as an overflow, which can be collected and used for recovery of the product.

The production process may be an upstream process or a downstream process. The upstream process may include one or more of the following: sterilization, screening or identification of microorganisms, media preparation, inoculum preparation, a bioreactor, a fermenter. Components for carrying out the upstream process may be referred to as upstream process components. The downstream process may include one or more of the following: filtration, extraction, ion exchange, clarification, isolation, crystallization, viral inactivation, concentration, polishing, purification, chromatography. Components for carrying out the downstream process may be referred to as downstream process components.

The production process may be a fed-batch process. Accordingly, the production process may be carried out in a fermenter designed to accommodate increasing volumes. The production system of the fed-batch process may always be at a quasi-steady state. One or more nutrients may be fed into the fermenter during cultivation and the product may remain in the medium until the end of the run. The fed-batch process may involve a culture in which a base medium supports initial cell culture and a feed medium is added to prevent nutrient depletion. The base medium and the feed medium may be considered parts of the medium in the vessel.

The fed-batch process may comprise the following phases:
- add media to bioreactor,
- set conditions (e.g., set temperature, pH),
- add inoculum,
- allow to grow in batch phase (control pH, DO, temperature; sample at intervals),
- when nutrients exhausted, move to fed phase,
- allow to grow in fed phase (control pH, DO, temperature; sample at intervals; supply additional nutrients),
- harvest product.

Furthermore, the ingredients to produce the chemical, pharmaceutical, and/or biotechnological product (e.g., a batch of the product) via the production process may be expensive. Accordingly, it may be desirable to ensure that as many batches as possible are successful so that expensive ingredients are not wasted. For example, ingredients to produce a 200-liter batch of a biopharmaceutical product may cost up to € 100.000 (one hundred thousand Euros).

The production process may be a perfusion process. The perfusion process may use a method to keep cells in the bioreactor while continuously exchanging culture medium. Fresh medium replaces nutrients and carbon sources, while cellular waste and medium depleted of nutrients are removed.

Examples of inputs or ingredients for the production process according to the present application may include biomass, such as bacteria, yeasts, molds, animal cells, plant cells. Further ingredients may include chemical compounds, proteins, such as enzymes and/or substrates.

Possible products produced via the production process may include a transformed substrate, baker's yeast, lactic acid culture, lipase, invertase, rennet.

Further exemplary biopharmaceutical products that can be produced according to the techniques described in the present disclosure include the following: recombinant and non-recombinant proteins, vaccines, gene vectors, DNA, RNA, antibiotics, secondary metabolites, growth factors, cells for cell therapy or regenerative medicine, half-synthesized products (e.g., artificial organs). Various production systems may be used to facilitate performance of the production process, e.g., cell based systems such as animal cells (e.g. CHO, HEK, PerC6, VERO, MDCK), insect cells (e.g. SF9, SF21), microorganisms (e.g. E. coli, S. cerevisiae, P. pastoris, etc.), algae, plant cells, cell free expression systems (cell extracts, recombinant ribosomal systems, etc.), primary cells, stem cells, native and gene manipulated patient specific cells, and matrix based cell systems.

Techniques described in the present disclosure may be useful for upstream (e.g., bioreactor) processes and for processes carried out at other levels of production (e.g., downstream processes). The production process may include (i.e., may be performed according to) at least two process parameters that have an influence on performance of the production process (e.g., product titer, quality attributes) and the product produced by the production process.

Process parameters (e.g., configurable parameters) may include one or more of the following: physical, chemical, and biological parameters. Physical parameters may include one or more of the following: temperature, pressure, vessel weight, liquid level, form level, agitator speed, power consumption, medium flow rate, culture viscosity, and gas holdup. Chemical parameters may include one or more of the following: pH, dissolved oxygen, dissolved carbon dioxide, redox potential, exit gas consumption, conductivity, and broth composition. Biological parameters may include one or more of the following: biomass concentration, enzyme concentration, biomass composition, viability, and morphology.

There are various challenges involved in the industrial production of products. In particular, production of a multitude of different products on the same process assembly complicates control of the production process. A wide range of operating conditions and changes in the production process create measurement and control challenges. Added challenges in assembling, cleaning, and sequencing of process data for analysis may arise. Each process parameter (e.g., configurable parameter) can potentially impact some or all measurements recorded during the production process. Further, it may take some time for changes to inputs or to conditions of the process to have an effect, which may make it challenging to determine whether the production process is proceeding as it should. The time needed to complete the production process may vary, e.g., in view of pauses or restarts to add ingredients or wait for equipment to be available.

It may be desirable to perform the production process or part of the production process by means of a processing assembly. The processing assembly may be configurable for a plurality of process steps and/or a plurality of production processes. Configuring the processing assembly for a process step or a production process may be complex, e.g., there may be hundreds or thousands of configurable parameters, and it may be challenging to determine values for the configurable parameters that will ensure successful completion of the production process or the process step, respectively. The processing assembly may be referred to as a process unit, a process assembly or a processing platform. The processing assembly may include a bioreactor, e.g., a stirred tank (STR) bioreactor.

Moreover, it may be desirable to prevent invalid configurations of the processing assembly and to enable untrained or minimally trained users to configure the processing assembly. In some cases, each process step may require a different configuration of the processing assembly in comparison to another process step and/or each production process may require a different configuration (e.g., a different initial configuration) in comparison to another production process.

Conventionally; configuration of a processing assembly including a bioreactor to perform a process step (e.g., a cell culture step or a production protein step) to produce a first molecule may require a trained engineer (e.g., a process engineer or a bioprocess engineer) to parameterize (e.g., set parameter values) the processing assembly to produce the first molecule. A recipe (e.g., on a recipe control system) may be used to guide the production process. The parameterization and subsequent validation of the parameter values of the processing assembly may take the trained engineer at least two weeks. The bioreactor may be for cell culture and molecule production and may have capabilities for batch and/or perfusion production processes. The cell culture step or the production protein step may include producing the first molecule via the bioreactor.

Continuing the example of a conventional approach, the processing assembly may be configured to produce a second molecule. The second molecule does not require multiple components of the processing assembly, e.g., a cell retention system and/or a laboratory (e.g., glucose) analyzer. According to the conventional approach, this would require the trained engineer to change parameter values and other configurations at the processing assembly, e.g., mode, alarms, readings of the laboratory analyzer, pump assignments, etc. In addition, the trained engineer may need to modify the recipe, e.g., via the recipe control system. Hence, it could take weeks or months for the trained engineer to reconfigure the processing assembly to produce the second molecule. Even if the processing assembly were provided with a default or standard configuration (e.g., by the process engineer) or a selectable one of multiple configurations at least partially suitable to perform the at least one process step of the production process, further configuration of the processing assembly and component activations might need to be carried out without guidance and/or manually tracked.

According to a first aspect, a computer implemented method for configuring a processing assembly to perform at least one process step of a production process to produce a chemical, pharmaceutical and/or biotechnological product is provided. The method comprises receiving, by a computing device, capability information of at least one the processing assembly, the capability information identifying: a plurality of components of the processing assembly, and a plurality of configurable parameters of the processing assembly. The method further comprises receiving, by the computing device, a primary recipe for a primary production process to produce a primary chemical, pharmaceutical and/or biotechnological product. The primary recipe comprises a plurality of primary process steps defining the primary production process, and one or more values for a first primary subset of the plurality of configurable parameters. The first primary subset of the plurality of configurable parameters corresponds to a first primary process step of the plurality of primary process steps. The method further comprises determining, by the computing device and based on the primary recipe, a first primary subset of the plurality of components of the processing assembly, wherein the first primary subset of the plurality of components corresponds to the first primary process step. The method further comprises causing, by the computing device, activation of the first primary subset of the plurality of components, wherein the remaining components of the processing assembly remain inactive. The method further comprises transmitting, by the computing device, the one or more values for the first primary subset of the plurality of configurable parameters to the processing assembly.

The first primary subset of the plurality of configurable parameters may be a proper subset. In the context of the present disclosure, a subset may refer to a proper subset.

The processing assembly may include one or more machines or devices. For example, the plurality of components of the processing assembly may include one or more upstream process components and/or one or more downstream process components. In some cases, an upstream process component may be used in a downstream process. In some cases, a downstream process component may be used in an upstream process. More specifically, the processing assembly may include one or more tanks for holding fluid (e.g., a biological buffer or fluid including constituents of interest). In addition or alternatively, the processing assembly may include a waste bag and/or a buffer bag. The processing assembly may further include a control system, also referred to as a local control system or a control device. In some cases, the control system may include a general-purpose computer and/or a user interface. The recipe control system may be part of the control system or may be physically separate from the control system (e.g., the recipe control system may be on one computing device and the control system may be on another computing device).

In some cases, the recipe control system may be combined with other software on the computing device or on a different device. More specifically, the recipe control system may be part of a supervisory control and data acquisition system (SCADA) for controlling, monitoring and analyzing industrial processes, or a batch system implemented on the computing device.

Advantageously, by centralizing configuration of the processing assembly at the computing device, it may be possible to configure and/or enable multiple processing assemblies more efficiently since it is no longer necessary for users to manually interact with corresponding control systems for the processing assemblies. In addition, configurations (e.g., including values for configurable parameters and/or components of a respective processing assembly to be activated) can be stored at the computing device for use on multiple processing assemblies. Hence, manual user interactions with processing assemblies may be advantageously limited to physically connecting components to the control system and (as needed) moving the processing assembly and/or related peripherals from one place to another in a production area.

The computing device may be for configuring the processing assembly. In addition or alternatively, the computing device may be for configuring a plurality of processing assemblies, wherein the plurality of processing assemblies includes the processing assembly. The plurality of processing assemblies may be located in a production area. The computing device may be communicatively connected (e.g., via a computer network) to the processing assembly, e.g., to the plurality of processing assemblies. The computing device may include or may be implemented using a general-purpose computer and/or an industrial personal computer. The computing device may include or may be implemented using a user interface (e.g., a graphical user interface) for enabling a user to interact with the computing device and/or control configuration of the processing assembly. In addition or alternatively, the computing device may include or may be implemented using a machine-to-machine interface, such as an application programming interface.

The computing device may be referred to as a supervisory system. The computing device may be usable to define a configuration of the processing assembly and store the defined configuration. The defined configuration may be activated or used to perform the at least one process step of the production process (e.g., the primary production process). The defined configuration may be part of workflow and/or recipe execution to ensure that the processing assembly is properly initialized to match a usage scenario.

Configurations of processing assemblies may be centralized in the computing device. At least some of the configurations of the processing assemblies may be standardized and/or validated. The computing device may enable a user to view capabilities of the processing assembly or the plurality of processing assemblies. The computing device may propose processing assemblies that may provide capabilities matching a particular recipe or filter out processing assemblies that do not provide capabilities matching the particular recipe. The computing device may adapt values of configurable parameters of the processing assembly automatically according to the production process (e.g., changing the settings of a balance from a range of 0... 1000 grams to a range of 0...10 kilograms and/or adapting a gravimetric flow controller to hold more feed media when the production process is continuous).

An activated component (e.g., an active component, an in-service component or a monitored component) of the plurality of components may have one or more of the following characteristics:
- the activated component along with information about the activated component (e.g., measurements, state and/or status, alarms) is visible in the user interface of the computing device;
- the user is able to interact with the activated component, e.g., via a user interface of the processing assembly and/or via the user interface of the computing device;
- the activated component is monitored, e.g., measurement as well as state and/or status information for or from the activated component is collected and/or recorded; and
- alarms and/or warnings are generated, e.g., based on monitored information from the activated component.

An inactive component (e.g., a deactivated component) of the plurality of components may have one or more of the following characteristics:
- the inactive component is not visible in the user interface of the computing device;
- the user is not able to interact with or control the inactive component, e.g., via the user interface of the processing assembly and/or via the user interface of the computing device;
- the inactive component is not monitored, e.g., measurement data for or from the inactive component is not collected and/or not recorded; and
- neither alarms nor warnings are generated.

Causing activation of the first primary subset of the plurality of components, such that the remaining components of the processing assembly remain inactive may have the effect of only activating components of the processing assembly that are needed to perform the at least one process step of the production process (e.g., the primary production process).

It may be advantageous to only activate components of the processing assembly that are needed to perform the at least one process step of the primary production process, particularly because this may reduce the information that needs to be transmitted to and processed by the computing device and/or this may reduce the information that needs to be processed by the processing assembly. Accordingly, it may be possible to conserve computing resources by only activating components of the processing assembly that are needed to perform the at least one process step.

In addition, it may be advantageous to only activate components of the processing assembly that are needed to perform the at least one process step of the primary production process in order to help focus the attention of the user on the at least one process step and prevent the user from being distracted by information that is not relevant to performing the at least one process step.

In addition, only activating components of the processing assembly that are needed to perform the at least one process step of the primary production process may prevent mistakes from being made by the user in connecting or using a component that is not needed. For example, unnecessary components of the plurality of components may adversely affect performance of the at least one process step of the primary production process, possibly leading to the result that the product produced by the primary production process does not meet a specified quality standard or the product is unusable. By ensuring that unnecessary components remain inactive, mistakes made by the user, e.g., plugging in or using the wrong component, may be rendered harmless since the wrong component will not be used or monitored.

In the context of the present disclosure, the terms first, second, third, etc., as well as primary, secondary, tertiary, etc. are used to distinguish one entity from another and do not indicate differences in rank or importance. More specifically, the terms primary and secondary may distinguish different production processes, while the terms first and second may distinguish different process steps within a (e.g., the same) production process. For example, the term primary may be used to refer to a production process corresponding to a primary recipe whereas the term secondary may be used to refer to a different production process corresponding to a secondary recipe.

The plurality of components of the processing assembly may include one or more of the following components: devices, peripherals, attachments and extensions. The plurality of components of the processing assembly can be used to carry out primary production processes (e.g., the production process to produce the chemical, pharmaceutical and/or biotechnological product).

The plurality of configurable parameters may include process parameters for production processes, e.g., process parameters for the primary production process.

The plurality of configurable parameters of the processing assembly may be controllable, i.e., values of at least some of the plurality of configurable parameters may be adjustable prior to and/or during performance of the production process (e.g., the primary production process). For example, the one or more values for the first primary subset of the plurality of configurable parameters may be adjusted prior to and/or during performance of the primary production process. Hence, the one or more values for the first primary subset of the plurality of configurable parameters may be set, e.g., by the user, by the computing device.

A recipe (e.g., the primary recipe or the secondary recipe) may be a structured representation of a production process (e.g., the primary production process), e.g., a structured representation of the activity of a processing assembly. Accordingly, process steps of the recipe (e.g., the plurality of primary process steps of the primary recipe) are expressed in a structured manner, e.g., in a format that can be interpreted by a machine. The recipe may provide a well-defined procedure that can be implemented when performing (e.g., executing) the production process and that dictates how the processing assembly is controlled over time. Values specified by the recipe (e.g., the values for the first primary subset of the plurality of configurable parameters) may be dynamically provided to the processing assembly during performance of the production process. The process steps of the recipe may indicate an action or may control the flow or sequence of the production process. The process steps of the recipe may repeat (e.g., process steps may be repeated until a condition is met or may be repeated a specified number of times) or depend on at least one condition (e.g., perform one step or another depending on the at least one condition).

The action may be passive, such as waiting for an event to occur (such as an increase in oxygen levels due to inactivity of a culture), or active, such as causing an event to occur (e.g. stirring or adding a fluid) or setting values and/or profiles for a given quantity.

The recipe may be as defined in the ISA-88 (i.e., International Society of Automation standard 88, ANSI/ISA88) Batch Control series of standards. The recipe may include a hierarchy (e.g., tree) of elements including a recipe procedure at the top or root of the hierarchy. The recipe procedure may correspond to (e.g., be scoped for) a process cell (e.g., as specified in ISA-88) and/or may include one or more recipe unit procedures. The process cell may include one or more processing assemblies. A recipe unit procedure may include one or more recipe operations. The recipe unit procedure may correspond to (e.g., be scoped to) one (e.g., only one) processing assembly. A recipe operation may correspond to (e.g., be scoped to) realize a physical, chemical or biological change. The recipe operation may include one or more recipe phases. A recipe phase may correspond to (e.g., be scoped to) a processing task that contributes to the recipe operation. The recipe phase may correspond to (e.g., may be implemented as) a process step.

Similarly, a production process may correspond to (e.g., be scoped for) a process cell. The production process may include one or more process stages. A process stage may correspond to one (e.g., only one) processing assembly. The process stage may include one or more process operations. A process operation may correspond to (e.g. be scoped to) realize a physical, chemical or biological change. The process operation may include one or more process actions. A process action may implement a processing task.

A process step (e.g., the first primary process step) the production process may correspond to (e.g., implement) a process action, a process operation or a process stage.

Hence, the recipe and/or the recipe procedure may define the production process. The production process may include one or more process stages. Each process stage may be defined by a recipe unit procedure of the recipe. Each process stage may include one or more process operations. Each process operation may be defined by a recipe operation of the recipe. Each process operation may include one or more process actions. Each process action may be defined by a recipe phase of the recipe.

In implementations including the plurality of processing assemblies, different parts of the recipe (e.g., different process steps defined by the primary recipe) may be performed on different processing assemblies in different locations. The processing assemblies may be integrated with each other in order to produce the chemical, pharmaceutical and/or biotechnological product.

In some cases, process steps of a recipe procedure may be performed at the supervisory control and data acquisition system (e.g., on the computing device) in a first location, whereas process steps of related recipe unit procedures may be performed on industrial personal computers (PCs) built into a cabinet of the control system in a second location different from the first location. The supervisory control and data acquisition system may be for controlling, monitoring and analyzing industrial processes. The supervisory control and data acquisition system and/or the control system may be implemented as a runtime system (e.g., on the computing device), such as a hyperconverged system in a local computing center. The supervisory control and data acquisition system and/or the control system may include one or more server PCs, desktop PCs, industrial PCs, next unit of computing devices or edge devices.

An exemplary recipe (e.g., an example of the primary recipe) may include the following procedure: "Fill bioreactor with 0.2L of given media, heat to 35 degrees, inoculate with clone to a density of 1e6 cells per mL, incubate stirring at 600 rpm for 36hrs controlling pH to 7.4 with bottom and top control i.e. addition of acid or base as needed to push pH back to 7.4; maintain temperature; gas at a rate of 0.1 of total volume per minute with air; feed with complex feed for 36hrs continuing to monitor and control pH, temperature; control DO with stirring and gassing, add inducer to trigger production. Harvest after 36hrs."

In addition or alternatively, a recipe (e.g., the primary recipe) may include the following configurable parameters and corresponding values:
Parameter [fillVolume] = [0.2] (L)
Parameter [stirLinear] = [0] (false)
Parameter [stirConstant] = [600] (rpm)
Parameter [stirQuad] = [0] (false)
Parameter [inocRatio] - [40] (%)
Parameter [sampleVol] = [0.01] (L)

The units in parentheses () may be explicitly provided or derived from context. The recipe (e.g., the primary recipe) for the production process (e.g., the primary production process) may be created or produced before the method for configuring the processing assembly to perform the at least one step of the production process to produce the chemical, pharmaceutical and/or biotechnological product is carried out.

The first primary subset of the plurality of configurable parameters may correspond to the first primary process step of the plurality of primary process steps in the sense that the first primary subset of the plurality of configurable parameters is listed in conjunction with the first primary process step in the primary recipe.

For example, the plurality of process steps defining the primary production process may each correspond to a subset of the plurality of configurable parameters, where one of the subsets of the plurality of configurable parameters is the first primary subset. The subsets of the plurality of configurable parameters for different process steps may overlap. In some cases, different process steps may have the same subset of the plurality of configurable parameters.

In some cases, the one or more values for the first primary subset of the plurality of configurable parameters may include values for each of the configurable parameters in the first primary subset of the plurality of configurable parameters. In other words, the primary recipe may specify a corresponding value for every configurable parameter in the first primary subset of configurable parameters. In other cases, default values may be used for configurable parameters (e.g., the first primary subset of the plurality of configurable parameters) when corresponding values for the configurable parameters are not specified in a recipe (e.g., the primary recipe). Use of the default values may have one or more advantages, e.g., reducing the size of the recipe, reducing the processing required to configure the processing assembly, reducing the number of values transmitted by the computing device to the processing assembly. In addition or alternatively, the user may be prompted for (e.g., to provide or to enter) values for configurable parameters (e.g., for the first primary subset of the plurality of configurable parameters) when the values for the configurable parameters are not specified in the recipe.

In some cases, values of a defined set of parameters of the plurality of configurable parameters may be adjustable, e.g., before starting the production process. In ISA88, the defined set of parameters are part of a formula of the recipe. Values of the defined set of parameters may specify or influence an amount of the product to be produced or may be used to select or specify process steps, e.g., repeating a filtering step a specified number of times. For example, values of the defined set of parameters may specify a target amount of product to be produced as 465 mg and/or that sterile filtration should be repeated five times.

For example, the first primary subset of the plurality of components may include an STR bioreactor (e.g., STR version 3 or STR3). The one or more values for the first primary subset of the plurality of configurable parameters may specify that the STR bioreactor has a vessel (e.g., bag) volume of 500L. The following values for the plurality of configurable parameters based on the one or more values for the first primary subset of the plurality of configurable parameters (in the table below, SP refers to setpoint and DE refers to diatomaceous earth homogenization in revolutions per minute):

| **Configurable parameter Name** | **Value** |
|---|---|
| Available | 1 (true) |
| Critical maximum pressure | 0.05 bar |
| Critical maximum weight | 510 kg |
| Manual bag arrangement weight | 50 kg |
| Manual bag arrangement type | 0 (false) |
| Maximum SP filling speed | 100 rpm |
| Maximum working pressure | 0.049 bar |
| Maximum working weight | 500 kg |
| Minimum auto draining weight | 0.8 kg |
| Minimum mixing weight | 125 kg |
| Minimum pH weight | 125 kg |
| Minimum recirculation weight | 0 kg |
| Minimum temporary weight | 125 kg |
| Minimum working weight | 125 kg |
| Mixable type | 1 (true) |
| Nominal weight | 500 kg |
| Residual weight | 0.8 kg |
| SP maximum stirrer speed | 110 rpm |
| SP minimum pH stirrer speed | 3 rpm |
| SP stirrer speed DE | 0 rpm |
| SP stirrer speed reduced | 0 rpm |
| SP stirrer speed | 3 rpm |
| Stirrer speed reduction weight | 125 kg |
| Maximum total gas flow | 100 l/min |

The first primary subset of the plurality of components may correspond to the first primary process step in the sense that the first primary subset of the plurality of components is listed in or can be derived from the first primary process step in the primary recipe.

For example, the plurality of process steps defining the primary production process may each correspond to a subset of the plurality of components of the processing assembly, where one of the subsets of the plurality of components is the first primary subset of the plurality of components. The subsets of the components for the different process steps may overlap. In some cases, multiple process steps correspond to the same subset of the plurality of components.

In some cases, a recipe may specify at least one value for each process parameter in a corresponding subset of the plurality of configurable parameters of the processing assembly. More specifically, the primary recipe may specify at least one value for each process parameter in the first primary subset of the plurality of configurable parameters.

The capability information may also be referred to as design space information.

The method may comprise deriving at least one rule and/or at least one constraint from the capability information of the at least one processing assembly. In some cases, the method comprises determining, based on the at least one rule and/or the at least one constraint, whether the first primary subset of the plurality of components can be activated. In addition or alternatively, the method may comprise determining, based on the at least one rule and/or the at least one constraint.

In some cases, causing activation of the first primary subset of the plurality of components is carried out only if it is determined, based on the at least one rule and/or the at least one constraint, that the first primary subset of the plurality of components can be activated.

In addition or alternatively, the method may comprise determining, based on the at least one rule and/or the at least one constraint, whether the one or more values for the first primary subset of the plurality of configurable parameters are valid. In some cases, transmitting the one or more values for the first primary subset of the plurality of configurable parameters to the processing assembly is only carried out if it is determined, based on the at least one rule and/or the at least one constraint, that the one or more values for the first primary subset of the plurality of configurable parameters are valid.

In some cases, transmitting the one or more values for the first primary subset of the plurality of configurable parameters to the processing assembly may include transmitting one or more manually configured values for the first primary subset of the plurality of configurable parameters to the processing assembly. In some cases, the values for the plurality of configurable parameters (e.g., the first primary subset of the plurality of configurable parameters) of the processing assembly may comprise both values from a recipe (e.g., from the primary recipe) and manually configured values. However, as discussed above, it is possible that it is not necessary to manually configure values for the first primary subset of the plurality of configurable parameters.

In some cases, each process step of a production process (e.g., the primary production process) may require a different configuration of the processing assembly (e.g., different values for configurable parameters or activation of different subsets of the plurality of components). In other cases, multiple process steps may use the same configuration of the processing assembly.

Transmitting the one or more values for the first primary subset of the plurality of configurable parameters to the processing assembly may include setting the one or more values at the processing assembly and/or causing the processing assembly to set the one or more values for the first primary subset of the plurality of configurable parameters.

The method may further comprise causing, by the computing device and using the first primary subset of the plurality components as well as the one or more values for the first primary subset of the plurality of configurable parameters, the processing assembly to perform the first primary process step.

The primary recipe may further comprise one or more values for a second primary subset of the plurality of configurable parameters. The second primary subset of the plurality of configurable parameters may correspond to a second primary process step of the plurality of primary process steps. The method may further comprise determining, by the computing device and based on the primary recipe, a second primary subset of the plurality of components of the processing assembly. The primary recipe may specify that the second primary subset of the plurality of components corresponds to the second primary process step. The method may further comprise causing, by the computing device, activation of the second primary subset of the plurality of components. The remaining components of the processing assembly may remain inactive. The method may further comprise transmitting, by the computing device, the one or more values for the second primary subset of the plurality of configurable parameters to the processing assembly. The preceding steps may be referred to as reconfiguring the processing assembly. More specifically, the processing assembly may have been configured to carry out the first primary process step and is reconfigured to carry out the second primary process step.

The second primary subset may differ from the first primary subset. The primary recipe may further comprise one or more values for additional primary subsets of the plurality of configurable parameters corresponding to additional primary process steps of the plurality of primary process steps. In addition or alternatively, the primary recipe may further comprise additional primary subsets of the plurality of components corresponding to the additional primary process steps of the plurality of primary process steps. For example, the primary recipe may include a specified number of primary process steps, e.g., at least 10 primary process steps, at least 20 primary process steps or at least 30 primary process steps. Each process step of the specified number of primary process steps may include one or more values for a corresponding primary subset of the plurality of configurable parameters and a corresponding primary subset of the plurality of components of the processing assembly.

The method may further comprise storing, by the computing device, a configuration of the processing assembly corresponding to the primary production process to produce the primary chemical, pharmaceutical and/or biotechnological product. The configuration of the processing assembly may include the values for each primary subset of the plurality of configurable parameters and may identify each primary subset of the plurality of components for each of the primary process steps.

The method may further comprise retrieving, by the computing device, the configuration of the processing assembly corresponding to the primary production process to produce the primary chemical, pharmaceutical and/or biotechnological product.

The method may further comprise causing, by the computing device and using the second primary subset of the plurality of components as well as the one or more values for the second primary subset of the plurality of configurable parameters, the processing assembly to perform the second primary process step.

The method may further comprise causing, by the computing device, the processing assembly to control the primary production process to produce the primary chemical, pharmaceutical and/or biotechnological product.

In addition or alternatively, the method may further comprise determining, by the computing device and based on the primary recipe, each primary subset of the plurality of components of the processing assembly for each primary process step of the plurality of primary process steps defining the primary production process. The method may further comprise causing, by the computing device, the processing assembly to control, using the activated components for each subset of the plurality of components and the one or more values for each subset of the plurality of configurable parameters, the primary production process to produce the primary chemical, pharmaceutical and/or biotechnological product.

The method may further comprise receiving a secondary recipe for a secondary production process to produce a secondary chemical, pharmaceutical and/or biotechnological product. The secondary recipe may comprise a plurality of secondary process steps defining the secondary production process and one or more values for a first secondary subset of the plurality of configurable parameters. The first secondary subset of the plurality of configurable parameters corresponds to a first secondary process step of the plurality of secondary process steps. The method may further comprise determining, by the computing device and based on the secondary recipe, a first secondary subset of the plurality of components of the processing assembly. The first secondary subset of the plurality of components may correspond to the first secondary process step. The method may further comprise causing, by the computing device, activation of the first secondary subset of the plurality of components. The remaining components of the processing assembly may remain inactive. The method may further comprise transmitting, by the computing device, the one or more values for the first secondary subset of the plurality of configurable parameters to the processing assembly.

The secondary chemical, pharmaceutical and/or biotechnological product may differ from the primary chemical, pharmaceutical and/or biotechnological product. In addition or alternatively, the first secondary subset of the plurality of configurable parameters may differ from the first primary subset of the plurality of configurable parameters and/or the second primary subset of the plurality of configurable parameters. In addition or alternatively, the first secondary subset of the plurality of components may differ from the first primary subset of the plurality of components and/or the second primary subset of the plurality of components.

The method may further comprise causing, by the computing device, the processing assembly, using the activated components of the first secondary subset of the plurality of components and the one or more values for the first secondary subset of the plurality of configurable parameters, to perform at least one process step of the plurality of secondary process steps defining the secondary production process.

The method may further comprise receiving, at the computing device, at least one selection specifying the primary recipe and the first primary process step. The method may further comprise retrieving, by the computing device and based on the primary recipe, the first primary subset of the plurality of components of the processing assembly. The method may further comprise causing, by the computing device, activation of the first primary subset of the plurality of components, wherein the remaining components of the processing assembly remain inactive. The method may further comprise transmitting, by the computing device, the one or more values for the first primary subset of the plurality of configurable parameters to the processing assembly.

The selection specifying the primary recipe and the first primary process step may be received after determining the first primary subset of the plurality of components of the processing assembly. Retrieving the first primary subset of the plurality of components of the processing assembly may comprise retrieving identities of the first primary subset of the plurality of components of the processing assembly. For example, the identities of the first primary subset of the plurality of components of the processing assembly may be retrieved from storage (e.g., a hard drive) of the computing device.

In some cases, since the first primary subset of the plurality of components of the processing assembly has already been determined, identities of the first primary subset of the plurality of components may be retrieved (e.g., from storage of the computing device) without needing to determine (or redetermine) the first primary subset of the plurality of components. In other cases, e.g., after applying an upgrade (for example, a physical, software or license extension), the step of determining, by the computing device and based on the primary recipe the first primary subset of the plurality of components of the processing assembly, may be carried out after receiving the at least one selection specifying the primary recipe and the first primary process step and instead of retrieving the first primary subset of the plurality of components of the processing assembly.

Causing activation of the first primary subset of the plurality of components may comprise prompting the user to connect one or more components of the first primary subset of the plurality of components. In addition or alternatively, causing activation of the first primary subset of the plurality of components may comprise prompting the user to calibrate one or more components of the first primary subset of the plurality of components. The one or more components of the first primary subset of the plurality of components may include a peripheral component of the processing assembly and/or an internal component of the processing assembly. For example, the computing device may prompt the user to manually connect the one or more components of the first primary subset of the plurality of components. Connecting the one or more components may include fluidically and/or electronically connecting the one or more components.

In some examples, the one or more components may include the control system and one or more sensors, laboratory analyzers (e.g., scientific instruments for measuring properties of biological samples), actuators and ancillary units.

A laboratory analyzer may the implemented as a device and/or a peripheral component. The laboratory analyzer may include one or more sensors and/or actuators. For example, the laboratory analyzer may include a high-performance liquid chromatography analyzer to measure, e.g., glycosylation.

The control system may be part of another device, e.g., a biological fluid processing device such as a filtration and/or purification device.

The method may further comprise tracking connection of the one or more components of the first subset of the plurality of components. For example, the computing device may record an identifier of a connected component and a timestamp associated with connection of the connected component. In addition or alternatively, the control system of the respective processing assembly may record the identifier of the connected component and the timestamp associated with connection of the connected component. The control system may send the identifier of the connected component and the timestamp associated with connection of the connected component to the computing device.

The plurality of components of the processing assembly may include one or more of the following: the control system, a bioreactor, a tank, a chromatography device, a filter system, a sensor (e.g., a balance), an actuator (e.g., a pump), a cell retention system, a laboratory (e.g., glucose) analyzer, at least one other peripheral.

For example, the plurality of components of the processing assembly may include at least one control system and/or at least one bioreactor. The bioreactor may be a manufactured and may support a biologically active environment. The bioreactor may be reusable (e.g., cleanable) or single use (e.g., including a disposable bag). The bioreactor may include a (possibly cylindrical or cubical) vessel in which the production process is carried out.

In addition or alternatively, the plurality of components of the processing assembly may include at least one tank for holding and/or mixing fluid (e.g., fluid including constituents of interest and/or biological fluid). The tank may be a container (e.g., holding about 50L to about 3000L), such as a metal (e.g., steel) or plastic container (e.g., bag) for mixing the fluid.

In addition or alternatively, the plurality of components of the processing assembly may include at least one flow controller. The flow controller (e.g., mass flow controller) may be used to manage flow of fluid including constituents of interest into chambers of the bioreactor and/or maintain a controlled environment in the bioreactor. The flow controller may be used to control dissolved oxygen by enriching airflow with oxygen or depleting the airflow with nitrogen.

In addition or alternatively, the plurality of components of the processing assembly may include at least one sensor. The at least one sensor may be connectable to the bioreactor. The at least one sensor may include one or more types of sensors, e.g., in-situ (or disposable) sensors, ex-situ sensors that use a sampling port and/or a sampling probe (e.g., for off-line analytics), sensors that use a non-invasive connection. The at least one sensor may include one or more pH sensors (e.g., including a redundant pH probe or an optical probe), a radio frequency identification devices (RFID) sensor, a biosensor (e.g., a biomass measurement sensor), and impedance sensor, a spectroscopic sensor, a temperature sensor, a thermal sensor, a carbon dioxide sensor, and a dissolved oxygen sensor.

In addition or alternatively, the plurality of components of the processing assembly may include at least one actuator. The at least one actuator may include a stirrer and/or means or a device for introducing nutrients.

In addition or alternatively, the plurality of components of the processing assembly may include at least one pump (e.g., for distributing the fluid) and/or at least one balance (e.g., a weighing device).

The cell retention system (e.g., an alternating tangential flow filtration (ATF) cell retention system) may include a device that retains cells inside the bioreactor while fresh media is added and chemical, pharmaceutical, and/or biotechnological products, waste products and spent or depleted media are removed.

The laboratory analyzer may be or include a glucose analyzer that measures glucose in cell or microbial culture media, e.g., during cell culture applications. The glucose analyzer may include a glucose meter. The glucose analyzer may include a glucose biosensor with microprocessor-based instrumentation and/or a test strip.

The at least one peripheral may be referred to as an ancillary unit or an extension. The at least one peripheral may include a device external to the control system.

The plurality of configurable parameters may include parameters having one or more types of a plurality of parameter types. The plurality of configurable parameters may one or more of the following:
- vessel (e.g., bag) parameters (e.g., for a bioreactor),
- sensor parameters (e.g., number of sensors, sensor type, signals),
- media/flow parameters (e.g., flow control, flow speed, flow type),
- pump parameters (e.g., pump type, number of pumps),
- balance parameters (e.g., balance type, balance range, number of balances),
- cell retention system parameters (e.g., ATF filter and/or flow),
- hardware parameters (e.g., programmable logic controller (PLC), spargers, tempering).

The plurality of configurable parameters may include one or more sets of parameters. For example, selecting a specific vessel volume for an STR version 3 (STR3) may cause default parameters associated with the specific vessel volume to be set. Specifically, the one or more values for the first primary subset of the plurality of configurable parameters may include a first value of a set of values, where the set of values includes a plurality of default values. Setting the first value (e.g., by transmitting the one or more values for the first primary subset of the plurality of configurable parameters to the processing assembly) may cause the plurality of default values to be set.

Triggering the setting of a plurality of default values by setting a single value (e.g., the first value) may be advantageous in that it reduces the values transmitted to the processing assembly and reduces processing required by the processing assembly in comparison to when all values in a set of values (e.g., the first value and the default values) are set. In addition, using sets of values may have the advantage of simplifying configuration of the processing assembly by reducing configurable parameters that need to be considered when creating the recipe (e.g., the primary recipe). For example, the bioreactor (e.g., the STR3) may have between about 5000 and about 7000 (e.g., about 6000) configurable parameters. In some cases, only about 120-150 (e.g., about 130-140 or about 138) configurable parameters of the bioreactor need to be determined when creating the recipe.

More generally, a recipe (e.g., the primary recipe) may include values for less than 3% of the configurable parameters or between 2% and 3% of the configurable parameters. Put another way, a subset of the plurality of configurable parameters (e.g., the first primary subset of the plurality of configurable parameters) may include less than 3% of the configurable parameters or between 2% and 3% of the configurable parameters and the recipe (e.g., the primary recipe) may comprise values for the configurable parameters in the first primary subset of the plurality of configurable parameters.

The method may comprise determining that the processing assembly includes all configurable parameters specified by the recipe. More specifically, the method may comprise determining that the parameters specified by the primary recipe are a subset (i.e. a first primary subset) of the plurality of configurable parameters.

The plurality of configurable parameters may include one or more of the following: vessel volume, number of probes, type of probes, number of feed pumps, number of cell retention devices, type of cell retention device, flow rate, number of exhaust coolers, number of filter heaters, number of valves, maximum/minimum stirrer speed, temperature (e.g., maximum temperature control range), gassing, liquid addition, sampling, and an indication about a fluid to add.

The plurality of configurable parameters may include parameters for attachments to the processing assembly and/or parameters for profiles or setpoints. For example, the plurality of configurable parameters may include one or more of the following:
- concentration of primary carbon source in batch media,
- concentration of primary nitrogen source in feed media,
- pH of an acid attached for top control of pH
- buffering capacity of batch media,
- density of cells in the inoculum,
- percentage of dissolved oxygen.
The configurable parameters above may concern attachments to the processing assembly, e.g., attachments to a bioreactor.

In addition or alternatively, the plurality of configurable parameters may include one or more of the following:
- the supply rate for constant gassing in a batch phase,
- the rate at which stir speed is incremented over time in the batch phase,
- the P or I parameter in a PI feedback loop for gassing control,
- the maximum airflow rate before oxygen supplementation occurs,
- the exponential coefficient in an exponential profile for feed,
- the initial feed rate in an exponential profile for feed,
- the duration of a plateau phase in a feed profile (for example, after an exponential period),
- the rate of temperature drop during a temperature shift for induction,
- temperature set point during batch phase.
The configurable parameters above may concern profiles and/or setpoints.

In addition or alternatively, the plurality of configurable parameters may include one or more the following:
- bioreactor fill volume (as a proportion of total bioreactor volume),
- inoculum volume (as a portion, for example, of bioreactor fill volume).
The configurable parameters above may concern discrete events and recipes.

In addition or alternatively, the plurality of configurable parameters may include one or more of the following:
- the cascade order (e.g., stirring then gassing then O₂ supplementation; or gassing then stirring then O₂ supplementation) in dissolved oxygen (DO) control,
- threshold for primary carbon source and/or DO initiate fed phase,
- frequency of sampling,
- volume of sample each time a sample is taken,
- threshold primary carbon source in sample to cause feed supplementation,
- threshold cell density to initiate harvest.
The configurable parameters above may concern recipe structure and flow control.

According to a second aspect, a computer program is provided. The computer program comprises instructions which, when the program is executed by a computer, cause the computer to carry out the method described above. The computer program may be implemented as a computer program product.

According to a third aspect, a computer readable medium is provided. The computer readable medium stores the computer program described above.

According to a fourth aspect, a computing device for configuring a processing assembly to perform at least one process step of a production process to produce a chemical, pharmaceutical and/or biotechnological product is provided. The computing device is communicatively connected to the processing assembly. The computing device comprises a memory configured to store instructions for at least one processor. The at least one processor is configured to receive capability information of at least one processing assembly. The capability information identifies a plurality of components of the processing assembly and a plurality of configurable parameters of the processing assembly. The at least one processor is further configured to receive a primary recipe for a primary production process to produce a primary chemical, pharmaceutical and/or biotechnological product. The primary recipe comprises a plurality of primary process steps defining the primary production process and one or more values for a first primary subset of the plurality of configurable parameters. The first primary subset of the plurality of configurable parameters corresponds to a first primary process step of the plurality of primary process steps. The at least one processor is further configured to determine, based on the primary recipe, a first primary subset of the plurality of components of the processing assembly. The first primary subset of the plurality of components corresponds to the first primary process step. The at least one processor is further configured to cause activation of the first primary subset of the plurality of components. The remaining components of the processing assembly remain inactive. The at least one processor is further configured to transmit the one or more values for the first primary subset of the plurality of configurable parameters to the processing assembly.

The subject matter described in this disclosure can be implemented as a method or on a device, possibly in the form of one or more computer programs (e.g., computer program products). Such computer programs may cause a data processing apparatus to perform one or more operations described in the present disclosure.

The subject matter described in the present disclosure can be implemented in a data signal or on a machine readable medium, where the medium is embodied in one or more information carriers, such as an optical storage device (e.g., CD-ROM, DVD-ROM), magnetic tape, a semiconductor memory, or a hard disk. In particular, disclosed subject matter may be tangibly embodied in a non-transitory machine (computer) readable medium, such that signals and carrier waves are excluded.

In addition, the subject matter described in the present disclosure can be implemented as a system including at least one processor, and a memory coupled to the at least one processor. The memory may encode one or more programs to cause the processor to perform one or more of the methods described in the application. Further subject matter described in the present disclosure can be implemented using various machines.

Details of one or more implementations are set forth in the exemplary drawings and description that follow. Other features will be apparent from the description, the drawings, and from the claims.

### Brief Description of the Drawings

FIG 1 shows a computing device communicatively connected to a plurality of processing assemblies.
FIG 2 shows a flow diagram including steps of a production process to produce monoclonal antibodies.
FIG 3 shows a first part of a processing assembly for a virus inactivation process step of the production process to produce monoclonal antibodies.
FIG 4 shows a second part of the processing assembly for the virus inactivation process step of the production process to produce monoclonal antibodies.
FIG 5 shows components of the processing assembly used in the production process to produce monoclonal antibodies.
FIG 6 shows a first part of a processing assembly for a virus reduction process step of the production process to produce monoclonal antibodies.
FIG 7 shows a second part of the processing assembly for the virus reduction process step of the production process to produce monoclonal antibodies.
FIG 8 shows a first part of a processing assembly for an ultra-filtration/diafiltration process step of the production process to produce monoclonal antibodies.
FIG 9 shows a second part of the processing assembly for the ultrafiltration/diafiltration process step of the production process to produce monoclonal antibodies.
FIG 10 shows a third part of the processing assembly for the ultra-filtration/diafiltration process step of the production process to produce monoclonal antibodies.
FIG 11 shows a flow chart for a method for configuring a processing assembly to perform at least one process step of a production process.

### Detailed Description

In the following text, a detailed description of examples will be given with reference to the drawings. Various modifications to the examples may be made. In particular, one or more elements of one example may be combined and used in other examples to form new examples.

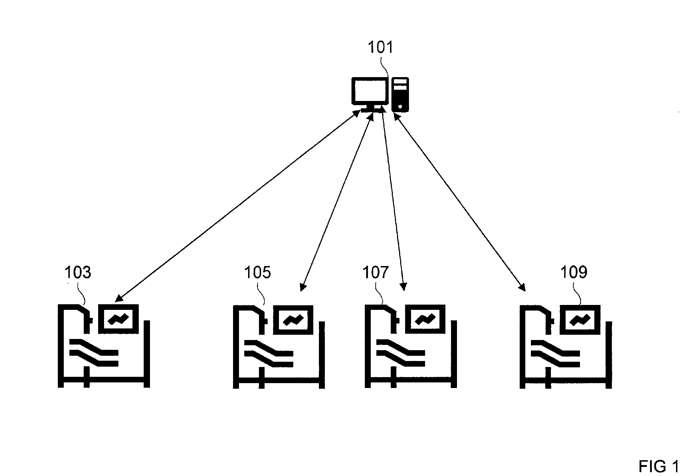

Figure 1 shows a computing device 101 communicatively connected to a plurality of processing assemblies 103 to 109. The computing device 101 may be implemented as a supervisory system capable of managing configurations of the plurality of processing assemblies 103 to 109. The processing assemblies 103 to 109 may be located in a production area. The computing device 101 may be located in the production area or remotely located. For example, the computing device 101 may be connected to the processing assemblies 103 to 109 via a computer network. In some cases, it may be advantageous for the computing device 101 to be remotely located in order to configure multiple processing assemblies (e.g., multiple ones of the processing assemblies 103 to 109) via the same computing device 101.

A computer implemented method for configuring a processing assembly to perform at least one process step of a production process to produce a chemical, pharmaceutical and/or biotechnological product may be carried out by means of the computing device 101 and one of the processing assemblies 103 to 109. For example, the computing device 101 may (e.g., upon request) receive capability information from the processing assembly 103. The computing device may determine, based on the capability information, that the processing assembly 103 is not capable of carrying out a specific process step of a specific production process to produce a chemical, pharmaceutical and/or biotechnological product.

For example, the capability information of the processing assembly 103 may identify a plurality of components of the processing assembly 103. The capability information may include identifiers corresponding to the plurality of components of the processing assembly 103. The computing device 101 may determine that a specific component needed to carry out the specific process step of the specific production process is not among the plurality of components.

The computing device 101 may then receive capability information from the processing assembly 105. The computing device 101 may determine, based on the capability information, that the processing assembly 105 is capable of carrying out the specific process step of the specific production process to produce the chemical, pharmaceutical and/or biotechnological product. Specifically, the capability information may indicate that the specific component needed to carry out the specific process step of the specific production process is among the plurality of components of the processing assembly 105.

For example, the specific process step might be a cultivation step carried out in a bioreactor and the specific production process might be a biotechnological process for continuous batch manufacturing. The biotechnological process may require retention device. Continuing the example, the processing assembly 103 may be a bioreactor that is not connected to a cell retention device, while the processing assembly 105 may be a bioreactor that can interact with or is connected to a cell retention device.

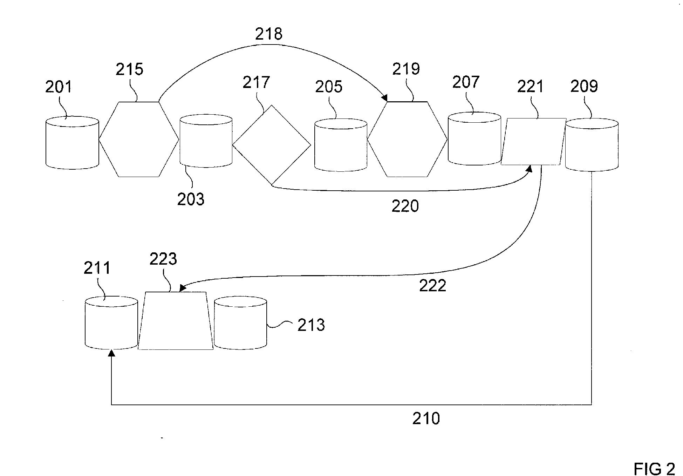

Another example, with reference to figure 2 (discussed in more detail below), is a downstream process where the same chromatography device (e.g., chromatography devices 215 and 219 as shown in figure 2 and described below) is used two times, i.e., for two different process steps. Also, at least one virus inactivation component 217, at least one virus reduction component 221 and at least one ultrafiltration/diafiltration component 223 (as shown in figure 2 and discussed below) may be implemented using different configurations of the same physical device, with different additional/peripheral components connected and/or activated.

Figure 2 shows a flow diagram including process steps of a production process to produce a chemical, pharmaceutical and/or biotechnological product, i.e., monoclonal antibodies. The flowchart shows components of a processing assembly (e.g., one of the processing assemblies 103 to 109) configured to produce the monoclonal antibodies. For example, the processing assembly 103 may be used. Although monoclonal antibodies and specific components of the processing assembly 103 are referred to below, the described techniques are applicable to other chemical, pharmaceutical and/or biotechnological products and other processing assembly components, particularly antigens and other biological products produced on a large scale.

The plurality of components of the processing assembly 103 may include a plurality of tanks 201-213, a chromatography device 215 (also referred to as a chromatograph) and a chromatography device 219. The chromatography device 215 and the chromatography device 219 may be the same chromatography device in different configurations. Put another way, a first downstream process component may be configured as the chromatography device 215 or the chromatography device 219. The plurality of components may further include at least one component for virus inactivation 217, at least one component for virus reduction and sterile-filtration 221, and at least one component for ultrafiltration/diafiltration 223. As discussed above, the at least one component for virus inactivation 217, the at least one component for virus reduction and sterile-filtration 221, and the at least one component for ultrafiltration/diafiltration 223 may be the same component in different configurations. Put another way a second downstream process component may be configured as the virus inactivation component 217, the virus reduction and sterile-filtration component 221 or the ultrafiltration/diafiltration component 223.

The chromatography device 215 may be connected to a control system (not shown) of the processing assembly 103. The control system may be located in the production area, e.g., near or in close proximity to other components of the processing assembly 103.

The tanks 201-213 may be used as input or output to an adjoining component of the processing assembly 103. For example, fluid including constituents of interest (e.g., biological fluid) from the tank 201 may be provided as input to the chromatography device 215 for processing and the chromatography device 215 may provide the fluid including constituents of interest as output to the tank 203 for intermediate storage and virus inactivation. The at least one component for virus inactivation 217 may receive the fluid including constituents of interest as input from the tank 203 and, after processing the fluid, the at least one component for virus inactivation 217 may provide the fluid including constituents of interest as output to the tank 205.

During virus inactivation, the chromatography device 215 may be disconnected from the tank 201 and the tank 203; the chromatography device 215 may be moved to a new position, as shown by an arrow 218. The chromatography device 215 may then function as the chromatography device 219. The chromatography device 219 may be connected to the tank 205 and the tank 207.

The chromatography device 219 may receive the fluid including constituents of interest as input from the tank 205 and after processing the fluid including constituents of interest may provide the fluid including constituents of interest as output to the tank 207.

The at least one component for virus inactivation 217 may be disconnected from the tank 203 and the tank 205; the at least one component for virus inactivation 217 may be moved to a new position, as shown an arrow 220. The at least one component for virus inactivation 217 may then function as the at least one component for virus reduction and sterile filtration 221. The at least one component for virus reduction and sterile filtration 221 may be connected to the tank 207 and the tank 209.

The at least one component for virus reduction and sterile filtration 221 may receive the fluid including constituents of interest as input from the tank 207, and after processing the fluid including constituents of interest, may provide the fluid including constituents of interest as output to the tank 209.

After transferring the fluid including constituents of interest to the tank 209, the at least one component for virus reduction and sterile filtration 221 may be disconnected from the tank 207 and the tank 209; the at least one component or virus reduction and sterile filtration 221 may be moved to a new position, as shown by the arrow 222. Similarly, the tank 209 they be moved to a new position as shown by the arrow 210. The at least one component for virus reduction and sterile filtration 221 may then function as the at least one component for ultrafiltration/diafiltration 223. The at least one component for ultrafiltration/diafiltration 223 may be connected to the tank 211 and the tank 213.

The tank 211 may provide the fluid including constituents of interest as input to the at least one component for ultrafiltration/diafiltration 223. After processing the fluid including constituents of interest, the at least one component for ultrafiltration/diafiltration 223 may provide the fluid including constituents of interest as output to the tank 213.

The at least one component for virus inactivation 217, the at least one component for virus reduction 221, and the at least one component for ultrafiltration/diafiltration 223 may use a common main control unit with different peripherals, sensors and actuators.

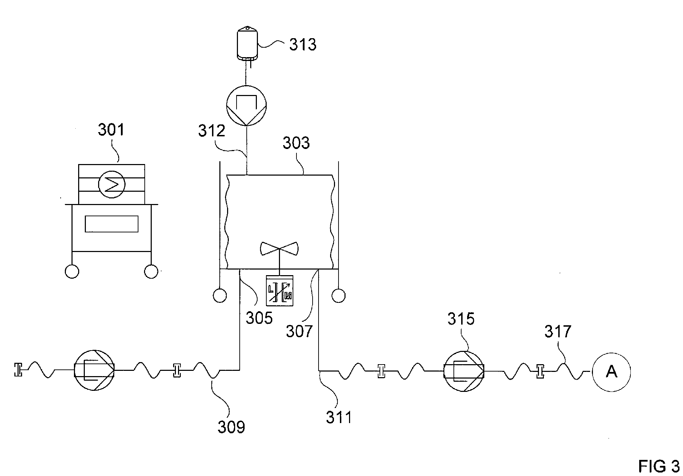

Figures 3 to 5 show a processing assembly (e.g., one of the processing assemblies 103 to 109) for performing at least one virus inactivation process step of the production process to produce monoclonal antibodies, as described in figure 2. In other words, figures 3 to 5 show three parts of the processing assembly for the virus inactivation process step of the production process to produce monoclonal antibodies. The processing assembly of figures 3 to 5 may be configured to carry out the virus inactivation process step. The virus inactivation process step may correspond to a first primary process step of the primary production process.

A primary recipe for the production process to produce monoclonal antibodies may comprise a plurality of primary process steps defining the production process to produce monoclonal antibodies and one or more values for a first primary subset of a plurality of configurable parameters of the processing assembly. The first primary subset of the plurality of configurable parameters may correspond to the virus inactivation process step.

Figure 3 shows a first part of the processing assembly for the virus inactivation process step of the production process to produce monoclonal antibodies. In some cases, each component of the plurality of components of the processing assembly is configured using at least one parameter of the plurality of configurable parameters of the processing assembly. The components depicted in figure 3 may be a subset of the plurality of components of the processing assembly. More specifically, the components depicted in figure 3 may be a first primary subset of the plurality of components. The first primary subset of the plurality of components may be determined by the computing device 101 based on the primary recipe.

In some cases, the first primary subset of the plurality of components of the processing assembly may include a temperature control unit (TCU) 301. The TCU 301 may be used to maintain a homogenous constant temperature (e.g., 37°C) in a tank (or vessel) 303 and/or in at least one other component in the first primary subset of the plurality of components of the processing assembly. At least one of the plurality of configurable parameters of the processing assembly may be for configuring the TCU 301. The first primary subset of the plurality of components of the processing assembly may further include the tank 303. The tank 303 may be a supply tank, a pH titration tank, a storage tank, a tank for mixing or a combination of these. For mixing, the tank 303 may include a railed port for coupling a mixer to the tank and/or front doors to allow for installation of a mixing bag. In addition or alternatively, the tank 303 may include a front port gate to facilitate installation of tubing lines and sensors and enable manipulation during filling, sampling and draining. The tank 303 may include or be implemented as a supply bag. At least one of the plurality of configurable parameters of the processing assembly may be for configuring the tank 303.

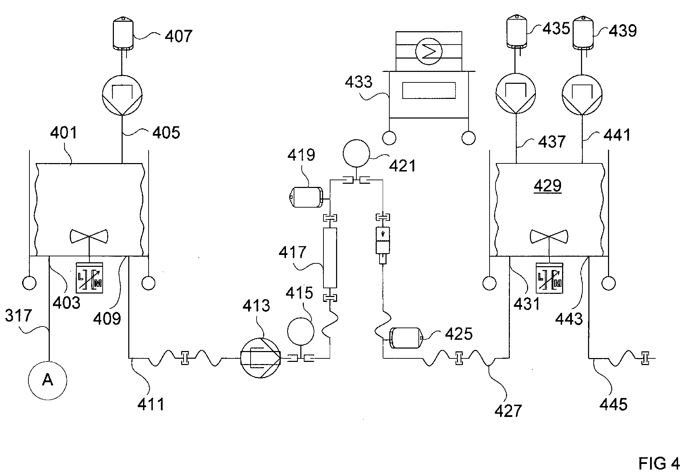

The tank 303 may be supplied (e.g., via an input valve) with fluid including constituents of interest and the tank 303 may be used for lowering the pH of the media supplied to the tank 303. The fluid may be biological fluid including media. For example, the tank 303 may be used for lowering the pH of the media supplied to the tank 303 before transferring the fluid including constituents of interest to a tank 401 (as shown in figure 4), discussed in more detail below. The tank 303 may include windows on the side to enable visual inspection of the fluid including constituents of interest contained within the tank 303 during mixing. The tank 303 may include a sloped bottom board and/or sheet exchange docketing for integrated temperature control. The tank 303 may include weighing functions for integrated volume control during mixing.

For example, the at least one of the plurality of configurable parameters of the processing assembly for configuring the tank 303 may include a volume indicating a volume in liters of the tank 303, a parameter indicating whether the tank 303 includes a supply bag, a parameter indicating a target pH level or range for the tank 303, one or more parameters for temperature control, one or more parameters for volume control. For example, the tank 303 may have a volume of between about 50 L and about 1000L. In some cases (e.g., large volume storage), the tank 303 may have a volume of up to about 3000 L.

The tank 303 may have an inlet port 305 and an outlet port 307. A filling line 309 may provide the fluid including constituents of interest to the tank 303 via the inlet port 305. The fluid including constituents of interest may exit the tank 303 via the outlet port 307 and a drain line 311.

The first primary subset of plurality of components of the processing assembly may include a plurality of sensors for the tank 303. The plurality of sensors may include a weight sensor, a temperature sensor, a pH sensor, and/or a pH including temperature sensor. The pH including temperature sensor may be a combined sensor that measures temperature (e.g., in degrees Celsius) and pH in (e.g., in millivolts).

The first primary subset of the plurality of configurable parameters may include at least one parameter to specify a type of pH measurement. Values for the parameter to specify the type of pH measurement may include a value of "two individual sensors" (e.g., one probe for temperature and one probe for pH), a value of "one combined sensor" (e.g., for temperature and pH measurement), a value of "single use" and a value of "multi-use". Two individual sensors may be less expensive than a combined sensor (e.g. probe). The combined sensor may have the advantage that there is only one probe to install for one combined sensor rather than two probes for two individual sensors. The single use (i.e., disposable) sensor may have one predefined calibration point and require only one point calibration. The multiuse (i.e. reusable) sensor may require two-point calibration.

Additional parameters of the first primary subset of the plurality of configurable parameters may the configurable depending on the values of other parameters. Specifically, one or more of the following may depend on the parameter to specify the type of pH measurement: input and/or output port locations, signal type, measurement range and calibration. For example, the combined sensor may have different input and/or output ports then the two individual sensors. Similarly, the single use sensor may have a different and/or calibration than the multiuse sensor.

The first primary subset of the plurality of components may include a control system (not shown) that is connected or connectable to the components depicted in figures 3 to 5.

The tank 303 may be connected to a pH adjustment means 313 via a transition line 312. The pH adjustment means 313 may include a bag or container for holding an acid or a base to adjust the pH of the fluid including constituents of interest for subsequent processing. The pH adjustment means 313 may be used to adjust the pH of the fluid including constituents of interest to a value defined by the primary recipe. For example, the pH adjustment means 313 may hold acid to manage low pH cycles. The pH adjustment means 313 may provide acid to the tank 303 as needed. Alternatively, the pH adjustment means 313 behold a base to manage high pH cycles. The pH adjustment means 313 may provide the base to the tank 303 as needed.

In the context of the present disclosure, "lines" (e.g., the transition line 312) may refer to fluidic connections between components of the plurality of components or parts of components. Such lines may be implemented as tubes, conduits or channels (e.g., plastic tubes) or other means of transferring fluid.

When causing, by the computing device 101, activation of the first primary subset of the plurality of components, the computing device 101 and/or a control system of the processing assembly may prompt or guide a user to manually connect components of the first primary subset of the plurality of components. For example, the computing device 101 and/or the control system of the processing assembly may prompt or guide the user to make fluidic connections, e.g., connect filling lines (e.g., the filling line 309), drain lines (e.g., the drain line 311), transition lines, etc.

The drain line 311 may be connected to a transfer line 315, which may in turn be connected to a filling line 317 for the tank 401 (e.g., an intermediate tank) shown in figure 4 and discussed below. A connection between figures 3 and 4 is indicated by a circled letter "A".

Figure 4 shows a second part of the processing assembly for the virus inactivation process step of the production process to produce monoclonal antibodies. The receiving line 317 from figure 3 continues into the tank 401 via an inlet port 403. The first primary subset of the plurality of components may include the tank 401. The tank 401 may include an intermediate bag. The tank 401 may have configurable parameters corresponding to the configurable parameters of the tank 303. The fluid including constituents of interest may be transferred to the tank 401 via the inlet port 403. The fluid including constituents of interest may remain in the tank 401 for a specified period of time, e.g., between about 50 minutes and about 70 minutes, preferably about 60 minutes. Virus inactivation and/or neutralization with a base may be carried out in the tank 401.

The first primary subset of plurality of components of the processing assembly may include a plurality of sensors for the tank 401. The plurality of sensors may include a temperature sensor, a pH sensor, and/or a pH including temperature sensor.

A transition line 405 may connect the tank 401 to an pH adjustment means 407. The pH adjustment means 407 may provide an acid or base to the tank 401 as needed. The pH adjustment means 407 may correspond to the pH adjustment means 313.

An outlet port 409 from the tank 401 may connect the tank 401 to a drain line 411. The drain line 411 may be connected to a pump 413. The pump 413 may be connected to a filter 417 via a pressure sensor 415 (e.g., for measuring pressure in the filter 417). The filter 417 may be connected to a bag 419 for waste. The bag 419 may be connected to a pressure sensor 421. The pressure sensor 421 may be connected to a bag 425 for waste. The bag 425 may be connected to a filling line 427 that is in turn connected to a receiving tank 429 via an inlet port 431. The receiving tank 429 may receive the fluid including constituents of interest from the tank 401 after further processing of the fluid (e.g., filtration).

The bag 419 and/or the bag 425 may be welded, free hanging, hanging from a hook or lying on a plate. The bag 419 and/or the bag 425 may have a relatively small volume, e.g., less than about 5 liters, preferably about 3 liters.

The pressure sensors 415 and 421 may be used for measuring pressure before and after the filter 417. The delta or difference between the pressure at the sensor 415 and the sensor 421 may be calculated to monitor the health or status of the filter 417. For example, the filter 417 may be operating at reduced functionality, e.g., the filter 417 may be blocked or broken, and this may be detectable by means of the pressure sensor 415 and/or the pressure sensor 421. In addition or alternatively, the pressure sensor 415 may be used to control the pump 413, rather than running the pump 413 at a fixed speed (e.g., via a set point). The pressure sensor 415 may be used either to stop the pump 413 or to switch from a fixed pump speed set point to pressure-based control, in case the pressure detected at the pressure sensor 415 increases because of reduced functionality (e.g., blockage) of the filter 417.

The receiving tank 429 may include a receiving bag. The receiving tank 429 may have configurable parameters corresponding to the configurable parameters of the tank 303. The first primary subset of the plurality of components of the processing assembly may include the receiving tank 429, the bag 419 and the bag 425.

The first primary subset of the plurality of components of the processing assembly may include a plurality of sensors for the receiving tank 429. The plurality of sensors may include one or more of the following: a weight sensor, a temperature sensor, a pH sensor, a pH including temperature sensor and a conductivity sensor.

In some cases, the first primary subset of the plurality of components of the processing assembly may include a TCU 433. The TCU 433 may correspond to the TCU 301. The TCU 433 may be used to maintain a homogenous constant temperature in the receiving tank 429 and/or in at least one other components in the first primary subset of the plurality of components of the processing assembly.

The receiving tank 429 may be connected to an optional pH adjustment means 435 via a transition line 437. The receiving tank 429 may be connected to an optional pH adjustment means 439 via a transition line 441. The pH adjustment means 435 may contain an acid and the pH adjustment means 439 may contain a base (or vice versa) for adjustment of the pH of the fluid including constituents of interest once the fluid is in the receiving tank 429. The pH adjustment means 435 and 439 may correspond to the pH adjustment means 313.

The pH adjustment means 435 and 439 are optional in the sense that they may be required in some configurations of the processing assembly and not in others. For example, in a first configuration the pH adjustment means 435 must be connected. In a second configuration, the pH adjustment means 439 must be connected. In a third configuration, the pH adjustment means 435 and the pH adjustment means 439 must be connected. In a fourth configuration, the pH adjustment means 435 and the pH adjustment means 439 must not be connected.

An outlet port 443 may connect the receiving tank 429 to a drain line 445.

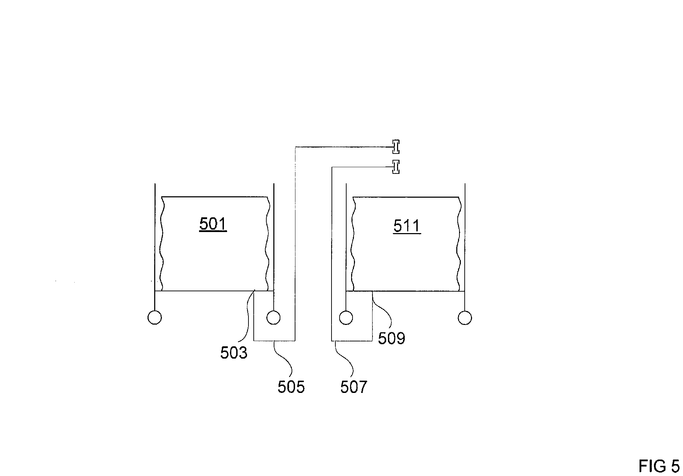

Figure 5 shows components that may be among the plurality of components of the processing assembly used in the production process to produce monoclonal antibodies. The components depicted in figure 5 may be in the first primary subset of the plurality of components of the processing assembly and/or the second primary subset of the plurality of components of the processing assembly.

The first primary subset and/or the second primary subset of the plurality of components of the processing assembly may include a tank 501. The tank 501 may be a post-flush buffer, preferably an equilibration post-flush buffer. An outlet port 503 of the tank 501 may connect the tank 501 to a drain line 505.

The first primary subset and/or the second primary subset of the plurality of components of the processing assembly may include a tank 511 for holding pre-flush water for injection. The pre-flush water for injection may be conditioned for use in the production (e.g., biopharmaceutical) process. More specifically, the pre-flush water for injection may be heated to a specified temperature (e.g., at least 230°C) at a specified pressure (e.g., at least the pressure of saturated steam). The tank 511 may be connected to a drain line 507 via an outlet port 509.

The tank 511 may be connected to the components shown in figures 3 and 4 to pre-flush the filter 417 in preparation for use of the filter 417 in an initial part of the virus inactivation process step.

The tank 501 may be connected to the components shown in figures 3 and 4 to flush remaining liquid out of the filter 417. The tank 501 may be connected to the filter 417. The tank 501 may be connected to the bag 419 and/or the bag 425. The tank 501 may be connected and used in a final part of the virus inactivation process step.

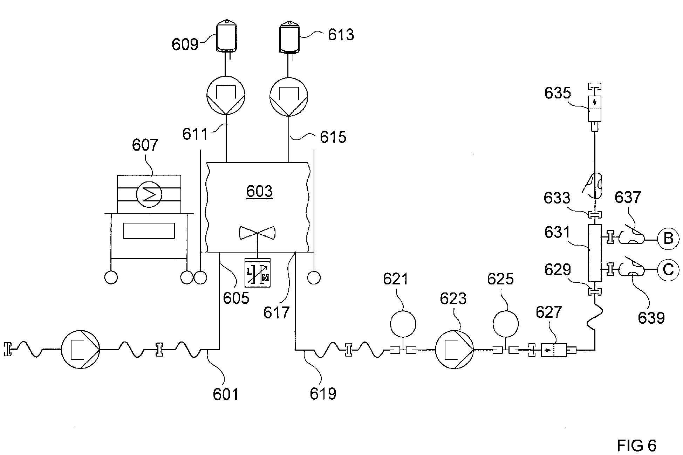

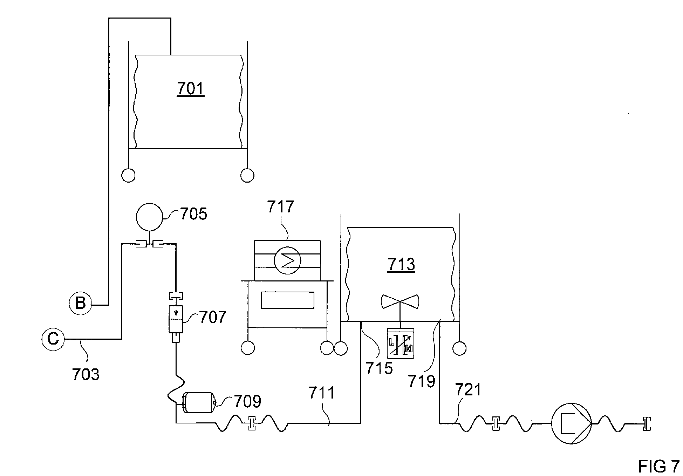

Figures 6 and 7 show the processing assembly for performing at least one virus reduction process step of the production process to produce monoclonal antibodies. Hence, the processing assembly used to perform the virus inactivation process step may be reconfigured to perform the virus reduction process step. The virus reduction process step may correspond to a second primary process step of the primary production process.

Figure 6 shows a first part of a processing assembly for a virus reduction process step of the production process to produce monoclonal antibodies. The virus inactivation process step may correspond to a first process step and the virus reduction process step may correspond to a second process step.

The primary recipe further comprises one or more values for a second primary subset of the plurality of configurable parameters of the processing assembly. The second primary subset of the plurality of configurable parameters may differ from the first primary subset of the plurality of configurable parameters. The second primary subset of the plurality of configurable parameters may correspond to the virus reduction process step.

The computing device 101 determines a second primary subset of the plurality of components of the processing assembly based on the primary recipe. The primary recipe may specify that the second primary subset of the plurality of components corresponds to the virus reduction process step.

To transition from the virus inactivation process step to the virus reduction process step, a user may be prompted to connect one or more of the following to components in the second primary subset: lines, pumps, pressure sensors. In addition or alternatively, the user may be prompted to calibrate one or more of the components in the second primary subset of the plurality of components. For example, the second primary subset of the plurality of components may partially overlap with the first primary subset of the plurality of components and may also contain components of the plurality of components that are not contained in the first primary subset of the plurality of components. Components in the second primary subset that are not in the first primary subset may be calibrated. The user may be prompted by the computing device 101, the control system or another device within the production area.

A filling line 601 may be connected to a tank 603 via an inlet port 605. The tank 603 may include or be implemented as a supply bag. The second primary subset of the plurality of components of the processing assembly may include the tank 603. The tank 603 may include configurable parameters corresponding to the configurable parameters of the tank 303. The second primary subset of the plurality of components of the processing assembly may include a plurality of sensors for the tank 603. The plurality of sensors may include a weight sensor, a temperature sensor, a pH sensor, a pH including temperature sensor and a conductivity sensor. The tank 603 may correspond to the tank 303.

In some cases, the second primary subset of the plurality of components of the processing assembly may include a TCU 607. The TCU 607 may correspond to the TCU 301 and may be used to maintain a homogenous constant temperature in the tank 603 and/or in at least one other component in the second primary subset of the plurality of components of the processing assembly.

An optional pH adjustment means 609 may be connected to the tank 603 via a transition line 611. An optional pH adjustment means 613 may be connected to the tank 603 via a transition line 615. The pH adjustment means 609 may contain an acid and the pH adjustment means 613 may contain a base, or vice versa. The pH adjustment means 609 and 613 may correspond to the pH adjustment means 313.

The pH adjustment means 609 and 613 are optional in the sense that they may be required in some configurations of the processing assembly and not in others. For example, in a first configuration the pH adjustment means 609 must be connected. In a second configuration, the pH adjustment means 613 must be connected. In a third configuration, the pH adjustment means 609 and the pH adjustment means 613 must be connected. In a fourth configuration, the pH adjustment means 609 and the pH adjustment means 613 must not be connected.

The tank 603 may include an output port 617 and may be connected to a drain line 619 via the output port 617. The drain line 617 may be connected to a flow sensor 621. The flow sensor 621 may be connected to a pump 623, which is in turn connected to a pressure sensor 625 and a prefilter 627. Flow control may be carried out by measuring output of the flow sensor 621 and controlling the speed of the pump 623, e.g., via the control system of the processing assembly (e.g., one of the processing assemblies 103 to 109). The prefilter 627 may be connected via an inlet port 629 to a virus filter 631. The virus filter 631 may be connected via a venting port 633 to a vent filter 635. The virus filter 631 may also be connected to a pre-flush port 637 and a filtration port 639.

Figure 7 shows a second part of the processing assembly for the virus reduction process step of the production process to produce monoclonal antibodies. Connections between figures 6 and 7 are indicated by the circled letters "B" and "C".

The second primary subset of the plurality of components of the processing assembly may include a waste container 701. The waste container 701 may include a waste bag. The waste container 701 may be connected to the pre-flush port 637 of figure 6. The filtration port 639 of figure 6 may be connected to a filter 703. The filter 703 may be connected to a pressure sensor 705. The pressure sensor 705 may be connected to a sterile filter 707. The sterile filter 707 may be connected to a waste tank 709. The waste tank 709 may be connected via a filling line 711 and an input port 715 to a receiving tank 713.

The second primary subset of the plurality of components may include the receiving tank 713. The receiving tank 713 may include or be implemented as a receiving bag. The receiving tank 713 may correspond to the receiving tank 429.

The second primary subset of the plurality of components may include a plurality of sensors for the receiving tank 713. The plurality of sensors may include a weight sensor and a temperature sensor.

In some cases, a TCU 717 may be used to maintain a homogenous constant temperature in the receiving tank 713 and/or in at least one other component in the second primary subset of the plurality of components of the processing assembly.

The receiving tank 713 may include an outlet port 719 connected to a drain line 721.

The virus reduction process step may be carried out as follows. A first part of the virus reduction process step may include pre-flush. The tank 511 may be (temporarily) connected to the virus filter 631, the prefilter 627 and the pump 623. Before processing the fluid including constituents of interest of the tank 603, the prefilter 627 and the virus filter 631 may be flushed via the pump 623 with water for injection from the tank 511. After passing through the prefilter 627 and the virus filter 631, the water for injection may flow into the waste container 701. Before or during the pre-flush, the vent filter 635 may be opened (e.g. by the user) to release air and closed after the pre-flush is completed.

Once the pre-flush is completed, the tank 511 may be disconnected from the virus filter 631, the prefilter 627 and the pump 623. Then the components of figures 6 and 7 from the tank 603 to the receiving tank 713 may be fluidically connected and fluid including constituents of interest resulting from the virus inactivation process step may be provided to the tank 603. The pH of the fluid including constituents of interest may be adjusted via the pH adjustment means 609 or the pH adjustment means 613 as needed.

A second part of the virus reduction process step may include filtration. The pump 623 may be activated to control the pressure sensor 625 to transfer the fluid including constituents of interest from the tank 603 via the prefilter 627 and the virus filter 631 into the receiving tank 713.

A third part of the virus reduction process step may include post flush, which may involve pumping liquid through the processing assembly at the end of the virus reduction process step. The tank 501 may be connected as input to the pump 623. The pump 623 may be activated (e.g., pressure controlled) to extract any remaining product (monoclonal antibodies in this example) from components of the processing assembly, e.g., from lines and/or filters, more specifically, one or more of the following: the prefilter 627, the virus filter 631, the filling line 601 and the transition line 615. The fluid including constituents of interest may be pumped through components of the processing assembly and into the receiving tank 713, e.g., to obtain as much of the product as possible.

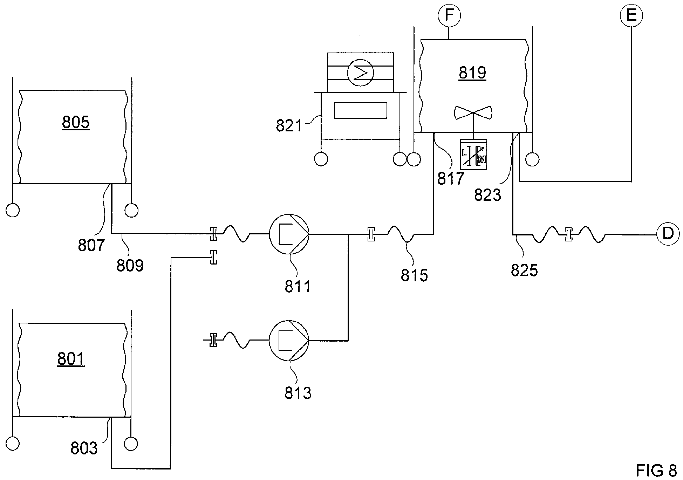

Figures 8 to 10 show the processing assembly for performing an ultrafiltration/diafiltration process step of the production process to produce monoclonal antibodies. Hence, the processing assembly used to perform the virus reduction process step may be reconfigured to perform the ultrafiltration/diafiltration process step. The ultrafiltration/diafiltration process step may correspond to a third primary process step of the of the plurality of primary process steps defined in the primary recipe. In addition, the primary recipe may include one or more values for a third primary subset of the plurality of configurable parameters. The ultrafiltration/diafiltration process step may correspond to a third primary subset of the plurality of components of the processing assembly.

Figure 8 shows a first part of a processing assembly for performing the ultrafiltration/diafiltration process step of the production process to produce monoclonal antibodies. The ultrafiltration/diafiltration process step may be implemented via membrane filtration in which forces such as pressure or concentration gradients lead to a separation through a semipermeable membrane. Suspended solids and solutes of high molecular weight may be retained in a retentate, while water and low molecular weight solutes pass through the membrane in a filtrate (i.e., permeate). Diafiltration may be a dilution process involving removal or separation of components (e.g., permeable molecules such as salts, small proteins, solvents) of a solution based on their molecular size by using micro-molecule permeable filters in order to obtain pure solution. Ultrafiltration and/or diafiltration may be implemented via tangential flow filtration (TFF).

The processing assembly may include a buffer tank 801, which includes an outlet port 803. The third primary subset of the plurality of components may include the buffer tank 801.

The third primary subset of the plurality of components of the processing assembly may include a feed tank 805 having an outlet port 807. The outlet port 807 may lead to a drain line 809 and from there to a pump 811. The pump 811 and a pump 813 may lead to a filling line 815. The filling line 815 may lead to an inlet port 817 of a recirculation tank 819. The third primary subset of the plurality of components of the processing assembly may include the recirculation tank 819. The recirculation tank 819 may be configured for mixing and recirculation of fluid including constituents of interest.

The plurality of configurable parameters of the recirculation tank 819 may correspond to the plurality of configurable parameters for configuring the tank 303.

The third primary subset of the plurality of components of the processing assembly may include a plurality of sensors for the recirculation tank 819. The plurality of sensors may include a temperature sensor, a pH sensor, and a weight sensor.

In some cases, a TCU 821 may be used to maintain a homogenous constant temperature in the recirculation tank 819 and/or in at least one other component in the third primary subset of the plurality of components of the processing assembly. At least one of the plurality of configurable parameters of the processing assembly may be for configuring the TCU 821.

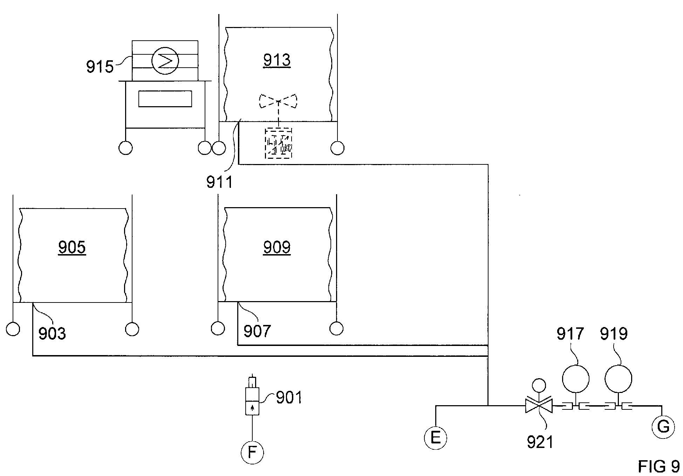

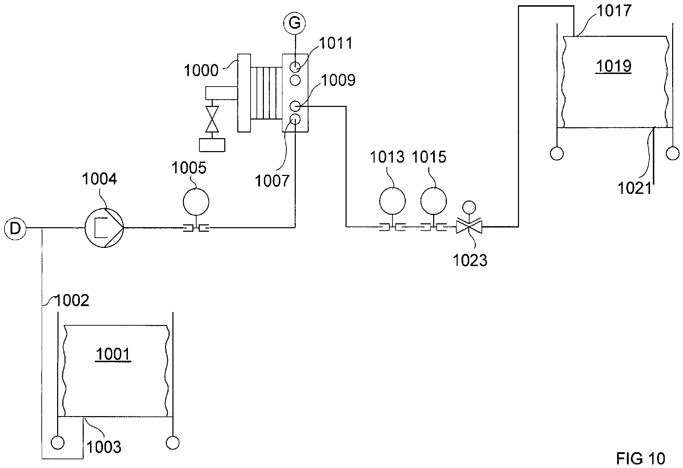

The recirculation tank 819 may include an inlet 823. The inlet 823 leads (via the letter "E") to further components described in figures 9 and 10 below; the inlet 823 allows retentate from a filter system 1000 (shown in figure 10) to flow into the recirculation tank 819. An outlet of the recirculation tank 819 is connected a drain line 825 and to further components described in the context of figure 10 below.

Connections between figures 8 and 9 are indicated via the circled letters "E" and "F". A connection between figures 8 and 10 is indicated via the circled letter "D".

Buffer (e.g., a biological buffer such as a Zwitterionic buffer or a Good buffer) from the buffer tank 801 may be used to maintain a constant level of the fluid in the recirculation tank 819. The pumps (e.g., the pumps 811, 813 and 1004) of the processing assembly may be used for different purposes. For example, at the beginning of the ultrafiltration/diafiltration process step, the pump 811 and the pump 813 may be used to transfer the fluid including constituents of interest into the recirculation tank 819. Later, the pump 811 and the pump 813 may be used to add buffer from the buffer tank 801 to the recirculation tank 819 to maintain a constant level of fluid in the recirculation tank 819 during diafiltration. In some cases, multiple buffer tanks may be used during diafiltration.

The third primary subset of the plurality of components may include the pumps 811, 813 and 1004. The third primary subset of the plurality of configurable parameters may specify what the pumps 811, 813 and 1004 are used for.

Figure 9 shows a second part of the processing assembly for the ultrafiltration/diafiltration process step of the production process to produce monoclonal antibodies.

A vent filter 901 may be connected to the recirculation tank 819 shown in figure 8. The vent filter 901 may be controlled in order to provide air as needed to the recirculation tank 819 The recirculation tank 819 shown in figure 8 may also be connected, via an inlet port 903, to a concentration tank 905. The third primary subset of the plurality of components of the processing assembly may include the concentration tank 905. The recirculation tank 819 shown in figure 8 may also be connected, via an inlet port 907, to a waste tank 909. The third primary subset of the plurality of components of the processing assembly may include the waste tank 909.

The recirculation tank 819 shown in figure 8 may also be connected, via an inlet port 911, to a container 913. The container 913 may be for storing the monoclonal antibodies produced via the primary production process. The container 913 may be implemented as a tank. The third primary subset of the plurality of components of the processing assembly may include the container 913.

In some cases, the third primary subset of the plurality of components of the processing assembly may include a TCU 915. The TCU 915 may be used to maintain a homogenous constant temperature in the container 913 and/or in at least one other component in the third primary subset of the plurality of components of the processing assembly. At least one of the plurality of configurable parameters of the processing assembly may be for configuring the TCU 915.

The recirculation tank 819 shown in figure 8 may also be connected to a pressure sensor 917 and a flow sensor 919. The flow sensor 919 may be connected to a filter system 1000 (e.g., a TFF filter system), as shown in figure 10. A control valve 921 may be used to control pressure or flow of retentate from the filter system 1000 (as shown in figure 10) to the recirculation tank 819. The control valve 921 may be controllable to set the flow between 0% and 100%.

Figure 10 shows a third part of the processing assembly for the ultrafiltration/diafiltration process step of the production process to produce monoclonal antibodies.

The drain line 825 shown in figure 8 may be connected to a flushing buffer 1001 via a filling line 1002 and an inlet port 1003 of the flushing buffer 1001. The flushing buffer 1001 may be implemented using a tank. The third primary subset of the plurality of components of the processing assembly may include the flushing buffer 1001.

The drain line 825 shown in figure 8 may also be connected to a pump 1004 and a pressure sensor 1005. The pressure sensor 1005 may be connected to the filter system 1000 via an input port 1007. The filter system 1000 may include an output port 1009 for permeate and an output port 1011 for retentate. The output port 1011 may be connected to the flow sensor 919 of figure 9. The third primary subset of the plurality of components of the processing assembly may include the filter system 1000.

The filter system 1000 may include one or more filter cassettes. The filter cassettes may be pressed together by a hydraulic mechanism of the filter system 1000.

The permeate output port 1009 of the filter system 1000 may be connected to a flow sensor 1013 and a pressure sensor 1015. The pressure sensor 1015 may be connected, via an inlet port 1017, to a receiving tank 1019. The tank 1019 may include or be implemented as a receiving bag. The receiving tank 1019 may include an outlet port 1021. The third primary subset of the plurality of components of the processing assembly may include the receiving tank 1019. A control valve 1023 may be used to control the flow of permeate from the filter system 1000 via the output port 1009 to the receiving tank 1019. The control valve 1023 may correspond to the control valve 921.

The third primary subset of the plurality of components of the processing assembly may include at least one sensor for the receiving tank 1019. The at least one sensor may include a weight sensor.

In a first part of the ultrafiltration/diafiltration process step, the filter system 1000 may be flushed via the flushing buffer 1001. The fluid including constituents of interest output as a result of the preceding process step (e.g., the virus reduction process step) may be transferred to the recirculation tank 819 for recirculation. The filter system 1000 may be initialized.

Depending on the content of the primary recipe, a second part of the ultrafiltration/diafiltration process step may be carried out in different ways. In a first alternative, the ultrafiltration/diafiltration process step may be limited to concentration. In a second alternative, the concentration may be followed by diafiltration. In a third alternative concentration and diafiltration may be followed by one or more additional cycles of concentration. In a fourth alternative, the ultrafiltration/diafiltration process step may begin with diafiltration followed by concentration.

During concentration and diafiltration, the fluid including constituents of interest may be recirculated via a feed pump (not shown) from the recirculation tank 819 the filter system 1000 and back into the recirculation tank 819. There may also be some permeate that flows from the filter system 1000 into the tank 1019. A purpose of the concentration may be to consolidate fluid including constituents of interest in the recirculation tank 819. In diafiltration, a constant level of the fluid including constituents of interest in the recirculation tank 819 may be maintained by adding the buffer from the buffer tank 801 to the fluid.

The buffer tank 801 may be connected to the processing assembly as needed and disconnected after use.

A third part of the ultrafiltration/diafiltration process step may include internal recovery and/or external product recovery. Two types of recovery may be carried out, e.g., concentrate recovery involving obtaining concentrate from the concentration tank 905 or product recovery involving obtaining the monoclonal antibodies from the container 913.

In the context of the present disclosure, each of the inlets and outlets may include a pinch valve to control fluid flow into the respective tank. The user may operate a respective pinch valve when prompted (e.g., by the control system) during execution of a process step. For example, the concentration tank 905 and the container 913 may be used during the third part of the ultrafiltration/diafiltration process step, i.e., during product recovery. Pinch valves for either the concentration tank 905 or the container 913 may be opened depending on the type of recovery being carried out. The pinch valve for the inlet 823 to the recirculation take 819 will be closed during recovery.

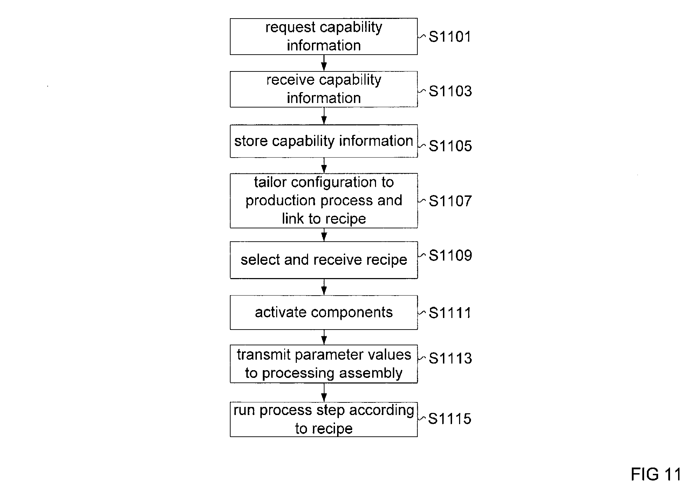

Figure 11 shows a flow chart for a method for configuring a processing assembly to perform at least one process step of a production process. For example, the at least one process step may include one or more of the following: the virus inactivation process step, the virus reduction process step and the ultrafiltration/diafiltration process step described above.

At S1101, the computing device 101 may request capability information from at least one processing assembly, e.g., one or more of the following: processing assembly 103, the processing assembly 105, the processing assembly 107 and the processing assembly 109.

At S1103, the computing device 101 receives capability information of the at least one processing assembly. The capability information identifies (i.e., specifies) a plurality of components of the processing assembly and a plurality of configurable parameters of the processing assembly. The capability information may include one or more of the following: existing application configurations, rules, and constraints.

At S1105, the capability information may be stored by the computing device 101. For example, a storage device may be attached to or be part of the computing device 101. The capability information may be stored in the storage device.

At step S1107, the method may further comprise selecting a production process to be performed and tailoring one or more of the plurality of configurable parameters of the processing assembly based on the selected production process. The selected production process may be referred to as a primary production process to produce a primary chemical, pharmaceutical and/or biotechnological product. In addition, a primary recipe corresponding to the primary production process may be linked to

At S1109, the method may further comprise selecting the primary recipe for use in performing the primary production process. The method may further comprise receiving, by the computing device 101, the primary recipe for the primary production process to produce the primary chemical, pharmaceutical and/or biotechnological product. The primary recipe comprises a plurality of primary process steps defining the primary production process and one or more values for the first primary subset of the plurality of configurable parameters. The first primary subset of the plurality of configurable parameters corresponds to a first primary process step of the plurality of primary process steps.

The method further comprises determining, by the computing device and based on the primary recipe, a first primary subset of the plurality of components of the processing assembly. The first primary subset of the plurality of components corresponds to the first primary process step.

In some cases, a user may arrange components of the first primary subset of the plurality of components and/or connect the components to a computer network.

At S1111, the computing device 101 causes activation of the first primary subset of the plurality of components. The remaining components of the processing assembly remain inactive.

In some cases, the computing device 101 and/or a local control system of the processing assembly may prompt the user to connect the first primary subset of the plurality of components to each other, e.g., according to the primary recipe.

At S1113, the computing device 101 transmits the one or more values for the first primary subset of the plurality of configurable parameters to the processing assembly.

The control system of the processing assembly may perform a check of the transmitted values, e.g., to determine validity of the values and/or the configuration of the processing assembly.

At S1115, the method may further comprise causing, by the computing device 110 and using the first primary subset of the plurality of components as well as the one or more values for the first primary subset of the plurality of configurable parameters, the processing assembly to perform the first primary process step.

The method discussed above may be particularly useful in a manufacturing situation when producing the chemical, pharmaceutical and/or biotechnological product on a large scale in a flexible production environment (e.g., a ballroom concept environment including a cleanroom with uniform classification). By providing and consolidating the components and configurable parameters necessary for the primary recipe and enabling the processing assembly to be fully and efficiently prepared for production of the product, production can start immediately once approval is given. Accordingly, the product can be prepared and brought to market more quickly, e.g., which may be particularly useful in urgent situations, such as the COVID-19 pandemic or another pandemic yet to come.

## Claims

1. A computer implemented method for configuring a processing assembly (103,105,107,109) to perform at least one process step of a production process to produce a chemical, pharmaceutical and/or biotechnological product, the method comprising:
receiving (S1 101), by a computing device (101), capability information of at least one processing assembly (103,105,107,109), the capability information identifying:
a plurality of components of the processing assembly (103,105,107,109), and
a plurality of configurable parameters of the processing assembly (103,105,107,109);
receiving (S1109), by the computing device (101), a primary recipe for a primary production process to produce a primary chemical, pharmaceutical and/or biotechnological product,
wherein the primary recipe comprises:
a plurality of primary process steps defining the primary production process, and
one or more values for a first primary subset of the plurality of configurable parameters,
wherein the first primary subset of the plurality of configurable parameters corresponds to a first primary process step of the plurality of primary process steps;
determining (S1111), by the computing device (101) and based on the primary recipe, a first primary subset of the plurality of components of the processing assembly (103,105,107,109),
wherein the first primary subset of the plurality of components corresponds to the first primary process step;
causing (S1113), by the computing device (101), activation of the first primary subset of the plurality of components, wherein the remaining components of the plurality of components remain inactive;
transmitting, by the computing device (101), the one or more values for the first primary subset of the plurality of configurable parameters to the processing assembly (103,105,107,109).

2. The method of claim 1, further comprising:
causing, by the computing device (101) and using the first primary subset of the plurality components as well as the one or more values for the first primary subset of the plurality of configurable parameters, the processing assembly (103,105,107,109) to perform the first primary process step.

3. The method of claim 1 or 2, wherein the primary recipe further comprises one or more values for a second primary subset of the plurality of configurable parameters;
wherein the second primary subset of the plurality of configurable parameters corresponds to a second primary process step of the plurality of primary process steps;
wherein the method further comprises:
determining, by the computing device (101) and based on the primary recipe, a second primary subset of the plurality of components of the processing assembly (103,105,107,109),
wherein the primary recipe specifies that the second primary subset of the plurality of components corresponds to the second primary process step;
causing, by the computing device (101), activation of the second primary subset of the plurality of components, wherein the remaining components of the processing assembly (103,105,107,109) remain inactive;
transmitting, by the computing device (101), the one or more values for the second primary subset of the plurality of configurable parameters to the processing assembly (103,105,107,109).

4. The method of claim 3, further comprising:
causing, by the computing device (101) and using the second primary subset of the plurality components as well as the one or more values for the second primary subset of the plurality of configurable parameters, the processing assembly (103,105,107,109) to perform the second primary process step.

5. The method of claim 4, further comprising:
causing, by the computing device (101), the processing assembly (103,105,107,109) to control the primary production process to produce the primary chemical, pharmaceutical and/or biotechnological product.

6. The method of any one of the preceding claims, further comprising:
receiving a secondary recipe for a secondary production process to produce a secondary chemical, pharmaceutical and/or biotechnological product,
wherein the secondary recipe comprises a plurality of secondary process steps defining the secondary production process and one or more values for a first secondary subset of the plurality of configurable parameters,
wherein the first secondary subset of the plurality of configurable parameters corresponds to a first secondary process step of the plurality of secondary process steps;
determining, by the computing device (101) and based on the secondary recipe, a first secondary subset of the plurality of components of the processing assembly (103,105,107,109),
wherein the first secondary subset of the plurality of components corresponds to the first secondary process step;
causing, by the computing device (101), activation of the first secondary subset of the plurality of components, wherein the remaining components of the processing assembly (103,105,107,109) remain inactive;
transmitting, by the computing device (101), the one or more values for the first secondary subset of the plurality of configurable parameters to the processing assembly (103,105,107,109).

7. The method of claim 6, further comprising:
causing, by the computing device (101), the processing assembly (103,105,107,109), using the activated components of the first secondary subset of the plurality of components and the one or more values for the first secondary subset of the plurality of configurable parameters, to perform the first secondary process step of the plurality of secondary process steps defining the secondary production process.

8. The method of claim 6 or 7, further comprising:
receiving, at the computing device (101), at least one selection specifying the primary recipe and the first primary process step;
retrieving, by the computing device (101) and based on the primary recipe, the first primary subset of the plurality of components of the processing assembly (103,105,107,109);
causing, by the computing device (101), activation of the first primary subset of the plurality of components, wherein the remaining components of the processing assembly (103,105,107,109) remain inactive;
transmitting, by the computing device (101), the one or more values for the first primary subset of the plurality of configurable parameters to the processing assembly (103,105,107,109).

9. The method of any one of the preceding claims, wherein causing activation of the first primary subset of the plurality of components comprises prompting a user to connect one or more components of the first primary subset of the plurality of components;
wherein the one or more components of the first primary subset of the plurality of components may include a peripheral component of the processing assembly (103,105,107,109) and/or an internal component of the processing assembly (103,105,107,109).

10. The method of claim 9, further comprising tracking connection of the one or more components of the first primary subset of the plurality of components.

11. The method of any one of the preceding claims,
wherein the plurality of components of the processing assembly (103,105,107,109) include one or more of the following: a control system, a bioreactor, a tank (201, 303), a chromatography device, a filter system (1000), a sensor, an actuator, a cell retention system, a laboratory analyzer.

12. The method of any one of the preceding claims,
wherein the plurality of configurable parameters include one or more of the following: vessel volume, number of probes, type of probes, number of feed pumps, number of cell retention devices, type of cell retention device, flow rate, number of exhaust coolers, number of filter heaters, number of valves, maximum/minimum stirrer speed, temperature, gassing, liquid addition, sampling, an indication about a fluid to add.

13. A computer program comprising instructions which, when the program is executed by a computer, cause the computer to carry out the method of any one of the preceding claims.

14. A computer-readable medium storing the computer program of claim 13.

15. A computing device (101) for configuring a processing assembly (103,105,107,109) to perform at least one process step of a production process to produce a chemical, pharmaceutical and/or biotechnological product, wherein the computing device (101) is communicatively connected to the processing assembly (103,105,107,109), the computing device (101) comprising:
a memory configured to store instructions for at least one processor;
wherein the at least one processor is configured to:
receive capability information of at least one processing assembly (103,105,107,109), the capability information identifying:
a plurality of components of the processing assembly (103,105,107,109), and
a plurality of configurable parameters of the processing assembly (103,105,107,109);
receive a primary recipe for a primary production process to produce a primary chemical, pharmaceutical and/or biotechnological product,
wherein the primary recipe comprises a plurality of primary process steps defining the primary production process and one or more values for a first primary subset of the plurality of configurable parameters,
wherein the first primary subset of the plurality of configurable parameters corresponds to a first primary process step of the plurality of primary process steps;
determine, based on the primary recipe, a first primary subset of the plurality of components of the processing assembly (103,105,107,109),
wherein the first primary subset of the plurality of components corresponds to the first primary process step;
cause activation of the first primary subset of the plurality of components, wherein the remaining components of the plurality of components remain inactive;
transmit the one or more values for the first primary subset of the plurality of configurable parameters to the processing assembly (103,105,107,109).
